# FASCICULE DE BREVET EUROPEEN

(11) **EP 1 798 434 B1**
(45) Date de publication et mention de la délivrance du brevet: **12.08.2009**
(21) Numéro de dépôt: 06125844.8
(22) Date de dépôt: 11.12.2006
(51) Int. Cl.: F16D 13/64

(54) **Dispositif de friction pour un embrayage, notamment de véhicule automobile**
Reibungsvorrichtung für eine Kupplung, insbesondere eines Kraftfahrzeuges
Friction device for a clutch, in particular for a motor vehicle

(30) Priorité: 13.12.2005 FR 0553856
(43) Date de publication de la demande: 20.06.2007
(73) Titulaire: Valeo Matériaux de Friction, 87020 Limoges (FR)
(72) Inventeur: Vatin, Géraud c/o Valeo Matériaux de Friction, 87570 Rilhac Rancon (FR); Walter, Philippe c/o Valeo Matériaux de Friction, 87270 Couzeix (FR)
(74) Mandataire: Lemaire, Marc

(56) Documents cités:
- WO-A-20/06000727
- FR-A- 2 420 056
- FR-A- 2 764 019
- GB-A- 2 341 901
- US-A- 2 646 151
- US-A- 6 016 899

## Description

La présente invention concerne un dispositif de friction perfectionné pour un embrayage, notamment de véhicule automobile.

Un embrayage de véhicule automobile est destiné à transmettre un couple entre un volant moteur du véhicule automobile et un arbre d'entrée de boîte de vitesses. A cet effet, l'embrayage comporte un mécanisme, solidaire en rotation du volant moteur, et un dispositif de friction, solidaire en rotation de l'arbre de boîte de vitesses.

Le mécanisme comporte un plateau de pression et un plateau de réaction, destinés à coopérer avec des première et seconde garnitures de friction du dispositif de friction. Ces garnitures de friction sont portées par au moins un support, habituellement de forme générale de révolution.

Le dispositif de friction doit réaliser un compromis entre diverses contraintes techniques.

D'une part, il convient de limiter la masse et l'inertie du dispositif de friction.

A cet effet, on souhaite limiter les dimensions des garnitures de friction, par exemple l'épaisseur et la largeur radiale de ces garnitures de friction. On souhaite également éviter la présence de rivets de solidarisation des garnitures sur leur support en optant autant que possible pour le collage de ces garnitures sur leur support.

D'autre part, il convient de pouvoir activer l'embrayage de façon progressive.

A cet effet, on souhaite incorporer des moyens élastiques, en général une masse en élastomère, dans le dispositif de friction, afin d'assurer cette progressivité.

Des effets de cisaillement limitent les possibilités d'agencer la masse en élastomère entre une garniture et son support.

On a donc proposé dans l'état de la technique, notamment dans EP-A-0 419 329, un dispositif de friction pour un embrayage, notamment de véhicule automobile, du type comportant des premier et second organes à garniture de friction, sensiblement annulaires et coaxiaux, écartés axialement et délimités par des faces de friction opposées.

Dans un dispositif de friction de ce type, les organes à garniture de friction comportent chacun un support portant une garniture de friction. Dans ce cas, la masse en élastomère est intercalée entre les premier et second supports.

Plus particulièrement, chaque support de garniture décrit dans EP-A-0 419 329 comporte une partie périphérique de forme générale annulaire et une partie centrale de liaison avec l'autre support de garniture. Les parties centrales des supports sont jointives. Les parties périphériques des supports, écartées axialement entre-elles, sont reliées aux parties centrales par des parties intermédiaires convergeant depuis ces parties périphériques vers ces parties centrales.

De ce fait, lorsque les garnitures de friction sont serrées entre les plateaux de pression et de réaction, les parties périphériques des supports de garniture se déforment en divergeant vers les parties intermédiaires des supports relativement rigides axialement. Par conséquent, l'écartement entre les parties périphériques des supports de garniture ne varie pas uniformément radialement, lorsque les garnitures de friction sont serrées entre les plateaux de pression et de réaction.

Il en résulte que les garnitures de friction ne coopèrent pas de manière uniforme radialement avec les plateaux de pression et de réaction, ce qui nuit aux performances de l'embrayage.

L'invention a notamment pour but de proposer un dispositif de friction muni de supports de garniture de friction se déplaçant sensiblement parallèlement l'un par rapport à l'autre lorsqu'ils sont sollicités par les plateaux de pression et de réaction.

A cet effet, l'invention a pour objet un dispositif de friction conforme à la revendication 1.

Les languettes de liaison permettent à la partie radialement externe de se déplacer par rapport au second organe à garniture de friction sensiblement par vissage selon un axe de rotation des organes à garniture de friction (on rappellera qu'un vissage selon un axe est une combinaison simultanée d'une rotation selon cet axe et d'une translation parallèlement à ce même axe).

Ainsi, lorsque l'écartement axial entre la partie radialement externe et le second organe à garniture de friction augmente, le décalage angulaire entre les extrémités de liaison de chaque languette de liaison diminue, et lorsque l'écartement axial entre la partie radialement externe et le second organe à garniture de friction diminue, le décalage angulaire entre les extrémités de liaison de chaque languette de liaison augmente.

Grâce aux languettes de liaison, les garnitures de friction, portées respectivement par la partie radialement externe et le second organe à garniture de friction, restent sensiblement parallèles entre eux lorsqu'ils sont sollicités par les plateaux de pression et de réaction. Ainsi, le contact des garnitures de friction avec les plateaux de pression et de réaction est optimisé.

Un dispositif de friction selon l'invention peut en outre comporter l'une ou plusieurs des caractéristiques suivantes :
- les languettes de liaison sont pliées de manière à ce que leurs première et seconde extrémités de liaison sont décalées axialement entre elles ;
- chaque languette de liaison est venue de matière avec les parties radialement interne et externe ;
- le dispositif de friction comporte des moyens de solidarisation de la partie radialement interne avec le second organe à garniture de friction, comportant au moins un orifice de solidarisation ménagé dans la partie radialement interne ;
- les moyens de solidarisation comportent au moins un orifice de solidarisation ménagé dans le second organe à garniture de friction, en regard de l'orifice ménagé dans la partie radialement interne, et un rivet de solidarisation passant à travers les orifices ;
- les moyens de solidarisation sont également destinés à coupler la partie radialement interne avec un arbre d'entrée de boîte de vitesses du véhicule automobile ;
- le dispositif de friction comporte des moyens élastiques d'entretoisement axial des premier et second organes à garniture de friction, destinés à assurer la progressivité de l'embrayage ;
- la partie radialement interne du premier organe à garniture de friction s'étend radialement jusqu'à un palier de frottement entourant un moyeu destiné à être couplé à un arbre d'entrée de boîte de vitesses et libre en rotation par rapport à ce moyeu, de manière à participer, d'une part, au centrage des premier et second supports par rapport au moyeu et, d'autre part, au positionnement axial de ce palier par coopération avec un épaulement de ce palier ;
- le second organe à garniture de friction comporte une partie radialement externe, comportant une garniture de friction, une partie radialement interne, destinée à être solidarisée avec le premier organe à garniture de friction, et des languettes élastiques de liaison munies chacune d'une première extrémité de liaison avec la partie radialement externe et d'une seconde extrémité de liaison avec la partie radialement interne, les première et seconde extrémités de liaison présentant un décalage angulaire entre elles variable en fonction de l'écartement axial des deux organes à garniture de friction.

L'invention sera mieux comprise à la lecture de la description qui va suivre, donnée uniquement à titre d'exemple et faite en se référant aux dessins annexés dans lesquels :
- la figure 1 est une vue en coupe axiale d'un dispositif de friction selon l'invention ;
- la figure 2 est un éclaté du dispositif de friction de la figure 1 ;
- la figure 3 est une vue de face d'un support du dispositif de friction des figures 1 et 2 ;
- la figure 4 est une vue en coupe axiale du dispositif de friction selon l'invention montrant une variante de réalisation d'un support pour garniture de friction de ce dispositif de friction ;
- la figure 5 est une vue similaire à la figure 3 du support du dispositif de friction de la figure 4.

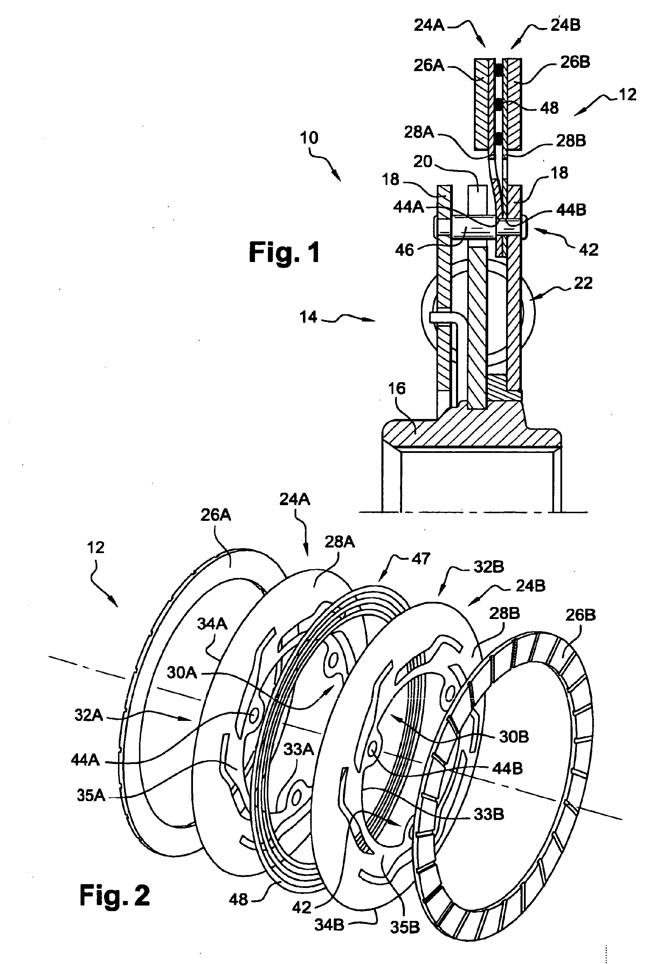

On a représenté sur la figure 1 un dispositif de friction 10 pour un embrayage, notamment de véhicule automobile.

Le dispositif de friction 10 comporte un disque de friction 12 et un amortisseur 14 de type classique, destiné à transmettre un couple entre le disque de friction 12 et un moyeu 16 destiné à être couplé à un arbre d'entrée de boîte de vitesses du véhicule automobile (non représenté).

L'amortisseur 14 comporte deux rondelles de guidage 18, solidaires en rotation avec le disque de friction 12, et un voile 20, solidaire en rotation avec le moyeu 16. L'amortisseur 14 comporte également des moyens élastiques 22 destinés à transmettre le couple entre les rondelles de guidage 18 et le voile 20 en amortissant d'éventuelles vibrations.

Le disque de friction 12, représenté plus en détail sur la figure 2, comporte des premier 24A et second 24B organes à garniture de friction, sensiblement annulaires et coaxiaux.

Les premier 24A et second 24B organes à garniture de friction comportent respectivement des première 26A et seconde 26B garnitures de friction, délimitées par des faces de friction opposées, destinées respectivement à coopérer avec un plateau de pression et un plateau de réaction (non représentés) solidaires en rotation d'un volant moteur (non représenté) du véhicule automobile.

Les premier 24A et second 24B organes à garniture de friction comportent en outre respectivement des premier 28A et second 28B supports pour les garnitures de friction 26A, 26B.

Ces premier 28A et second 28B supports sont sensiblement annulaires, coaxiaux, et écartés axialement l'un par rapport à l'autre.

En général, ces premier 28A et second 28B supports sont en matériau composite ou en acier comportant de préférence 0,68% ou 0,75% de carbone (désigné respectivement XC68 et XC75 selon la norme française AFNOR).

Les premier 28A et second 28B support comportent chacun une partie radialement interne 30A, respectivement 30B, solidaire en rotation des rondelles de guidage 18, et une partie radialement externe 32A, respectivement 32B, sur laquelle est fixée la première 26A, respectivement seconde 26B, garniture de friction, par exemple par collage. En variante, au moins une garniture de friction et un support peuvent être formés en une seule et même pièce, par exemple moulée par injection.

La partie radialement interne 30A, respectivement 30B, délimite un contour interne 33A, respectivement 33B, du premier 24A, respectivement second 24B, organe à garniture de friction. La partie radialement externe 32A, respectivement 32B, délimite un contour externe 34A, respectivement 34B, du premier 24A, respectivement second 24B, organe à garniture de friction.

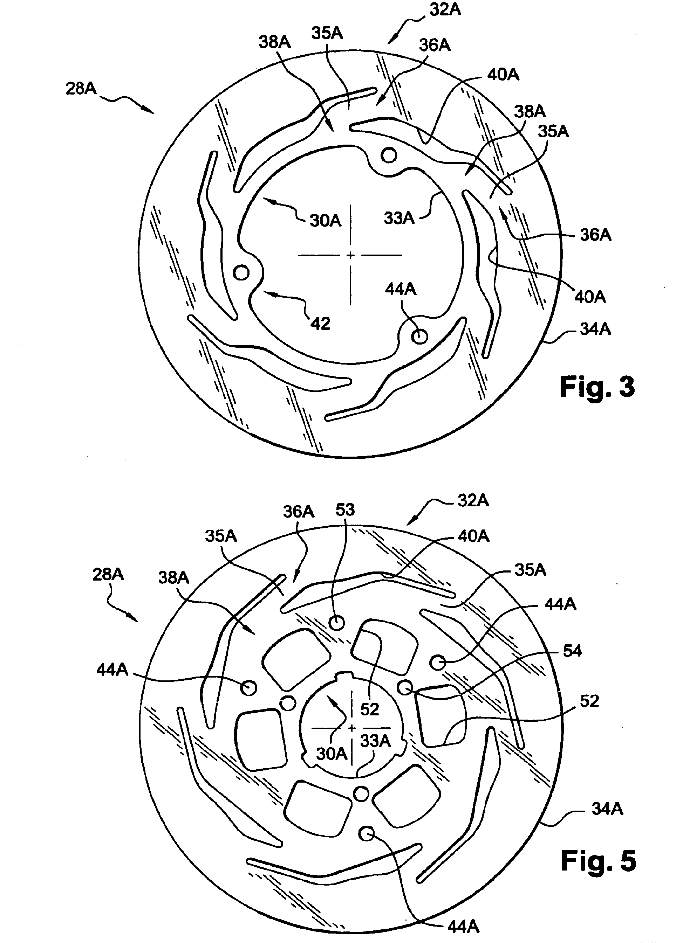

On a représenté plus en détail le premier support 28A sur la figure 3. On notera que, conformément au mode de réalisation représenté, les premier 28A et second 28B supports sont similaires.

Le premier support 28A comporte des languettes élastiques de liaison 35A, munies chacune d'une première extrémité 36A de liaison avec la partie radialement externe 32A et d'une seconde extrémité 38A de liaison avec la partie radialement interne 30A.

Dans le mode de réalisation décrit, les languettes de liaison 35A sont venues de matière avec les parties radialement interne 30A et externe 32A. Généralement, les languettes de liaison 35A sont obtenues par découpage de fenêtres 40A dans le support 28A entre les parties radialement interne 30A et externe 32A, les languettes de liaison 35A délimitant alors les fenêtres 40A.

Comme cela est représenté sur la figure 1, les languettes de liaison 35A du premier support 28A sont pliées de manière à ce que leurs première 36A et seconde 38A extrémités de liaison soient décalées axialement entre elles.

Ainsi, les première 36A et seconde 38A extrémités de liaison de chaque languette de liaison 35A présentent un décalage angulaire entre elles variable en fonction de l'écartement axial des deux organes à garniture de friction 24A, 24B. Généralement, la distance entre les première 36A et seconde 38A extrémités de liaison de chaque languette de liaison 35A est comprise entre 5 et 60mm, de préférence entre 20 et 40mm.

On notera que les languettes de liaison 35A forment en outre une liaison rotulante autorisant un décalage d'alignement des axes entre, d'une part, les premier 28A et second 28B supports et, d'autre part, le moyeu 16. Ainsi, les garnitures de friction 26A, 26B restent sensiblement parallèles même en présence d'un tel décalage.

Le dispositif de friction 10 comporte en outre des moyens 42 de solidarisation du support 28A avec les rondelles de guidage 18. Ces moyens 42 de solidarisation comportent au moins un orifice 44A de solidarisation ménagé dans la partie radialement interne 30A, par exemple trois orifices 44A répartis angulairement. Ces orifices 44A sont destinés à recevoir des organes de solidarisation 46 respectifs complémentaires, par exemple des rivets de solidarisation classiques 46, également destinés à solidariser les rondelles de guidage 18 entre elles.

Le second support 28B est similaire au premier support 28A. Il comporte également des parties radialement interne 30B et externe 32B, liées entre elles par des languettes de liaison 35B. Cependant, dans l'exemple représenté, les languettes de liaison 35B du second support 28B ne sont pas pliées, contrairement aux languettes de liaison 35A du premier support 28A.

On notera toutefois que la présence de ces languettes de liaison 35B est préférable, afin de former également une liaison rotulante. On assure ainsi plus efficacement le parallélisme des garnitures de friction 26A, 26B.

Le second support 28B comporte également, sur sa partie radialement interne 30B, des orifices de solidarisation 44B de ce support 28B avec les rondelles de guidage 18 par exemple trois orifices 44B ménagés dans la partie radialement interne 30B et répartis angulairement, en regard des orifices 44A.

Grâce aux moyens de solidarisation 42, les parties radialement internes 30A, 30B des supports 28A, 28B sont solidaires, et les parties radialement externes 32A, 32B, portant les garnitures de friction, sont aptes à se déplacer axialement parallèlement l'un par rapport à l'autre, par vissage selon leur axe.

Le disque de friction 12 comporte par ailleurs des moyens élastiques 47 d'entretoisement axial des premier 28A et second 28B supports, destinés à assurer la progressivité de l'embrayage. Conformément au mode de réalisation décrit, les moyens élastiques d'entretoisement 47 axial comportent une masse 48 en élastomère comportant de préférence trois cordons de formes générales annulaires, sensiblement coaxiaux, agencés entre les premier 28A et second 28B supports.

On notera que les moyens élastiques 47 d'entretoisement axial comportent également les languettes de liaison 35A, 35B. En effet, l'élasticité de ces languettes de liaison 35A, 35B participe à la progressivité de l'embrayage.

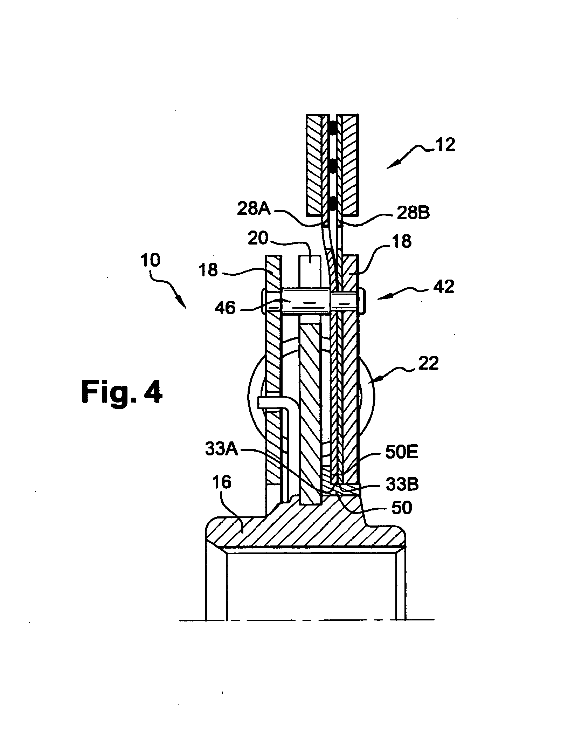

On a représenté sur les figures 4 et 5 un dispositif de friction selon une variante de réalisation de l'invention. Sur ces figures 4 et 5, les éléments analogues à ceux des figures précédentes sont désignés par des références identiques.

Conformément à cette variante de réalisation, les parties radialement internes 30A, 30B des premier 28A et second 28B supports s'étendent radialement jusqu'à un palier de frottement 50 entourant le moyeu 16 et solidaire en rotation des rondelles de guidage 18.

Ainsi, les contours internes 33A, 33B respectifs des premier 28A et second 28B supports coopèrent avec ce palier 50 de manière à participer, d'une part, au centrage des premier 28A et second 28B supports par rapport au moyeu 16 et, d'autre part, au positionnement axial de ce palier 50 par coopération avec un épaulement 50E de ce palier 50.

On notera que les parties radialement internes 30A, 30B comportent des fenêtres 52 destinées à laisser un passage pour les moyens élastiques 22.

De préférence, les parties radialement internes 30A, 30B comportent chacun un orifice de centrage 53 ménagé sur un même rayon que les orifices de solidarisation 44A, 44B. Cet orifice de centrage 53 participe au centrage du support 28A, 28B correspondant par rapport aux rondelles de guidage, par exemple par passage d'une tige (non représentée) à travers cet orifice 53 et des orifices correspondants ménagés sur les rondelles de guidage.

De préférence également, les parties radialement internes 30A, 30B comportent des orifices 54 radialement interne par rapport aux orifices de solidarisation 44A, 44B. Conformément à une variante de réalisation non représentée, ces orifices 54 peuvent recevoir des pattes d'une rondelle d'amortissement des moyens élastiques 22, afin de solidariser en rotation cette rondelle de frottement avec les supports 28A, 28B, et donc avec les rondelles de guidage 18.

Il est à noter que dans tous les modes de réalisations précédemment décrits, il est possible de découpler le nombre de languettes de liaison de celui du nombre de orifices de solidarisation à la rondelle de guidage. En effet, dans la configuration de certains disques de friction, le nombre d'orifices de solidarisation est limité. Mais pour pouvoir passer le couple, il faut un nombre minimum de languettes, nombre minimum pouvant alors être supérieur à celui des orifices de solidarisation.

On notera enfin que l'invention n'est pas limitée au mode de réalisation précédemment décrit.

Le dispositif de friction selon l'invention pourra en effet comporter diverses variantes sans pour autant sortir du cadre de l'invention.

Par exemple, afin de flexibiliser la liaison support/garniture, il est possible de prévoir des fentes débouchant sur le diamètre extérieur du support (dans une variante de réalisation ces fentes sont sensiblement radiales). Cela va réduire l'effet bilame entre les deux composants, lors des sollicitations thermiques, dû au fait qu'ils ont généralement des coefficients de dilatation différents.

De manière générale, le design des supports, en dehors des zones où se trouvent les languettes de liaison, peut être quasiment quelconque à partir du moment où il préserve une surface d'appui suffisante pour les cordons de silicone et que cela n'affecte pas l'aptitude à passer le couple. Des ajours ou des fentes peuvent aussi servir à limiter l'inertie du système.

## Revendications

1. Dispositif (10) de friction pour un embrayage, notamment de véhicule automobile, du type comportant des premier (24A) et second (24B) organes à garniture de friction, sensiblement annulaires et coaxiaux, écartés axialement et délimités par des faces de friction opposées, dans lequel le premier organe à garniture de friction (24A) comporte :
- une partie radialement externe (32A), comportant une garniture de friction (26A),
- une partie radialement interne (30A), destinée à être solidarisée avec le second organe à garniture de friction (24B),
**caractérisé en ce que** le premier organe à garniture de friction (24A) comporte en outre des languettes élastiques de liaison (35A) munies chacune d'une première extrémité de liaison (36A) avec la partie radialement externe (32A) et d'une seconde extrémité de liaison (38A) avec la partie radialement interne (30A), les première (36A) et seconde (38A) extrémités de liaison présentant un décalage angulaire entre elles variable en fonction de l'écartement axial des deux organes à garniture de friction (24A, 24B), et chaque languette de liaison (35A) étant venue de matière avec les parties radialement interne (30A) et externe (32A).

2. Dispositif de friction (10) selon la revendication 1, **caractérisé en ce que** les languettes de liaison (35A) sont pliées de manière à ce que leurs première (36A) et seconde (38A) extrémités de liaison sont décalées axialement entre elles.

3. Dispositif de friction (10) selon l'une quelconque des revendications précédentes, **caractérisé en ce qu'**il comporte des moyens (42) de solidarisation de la partie radialement interne (30A) avec le second organe à garniture de friction (24B), comportant au moins un orifice de solidarisation (44A) ménagé dans la partie radialement interne (30A).

4. Dispositif de friction (10) selon la revendication 3, **caractérisé en ce que** les moyens de solidarisation (42) comportent au moins un orifice de solidarisation (44B) ménagé dans le second organe à garniture de friction (24B), en regard de l'orifice (44A) ménagé dans la partie radialement interne (30A), et un rivet de solidarisation (46) passant à travers les orifices de solidarisation (44A, 44B).

5. Dispositif de friction (10) selon la revendication 3 ou 4, **caractérisé en ce que** les moyens de solidarisation (42) sont également destinés à coupler la partie radialement interne (30A) avec un arbre d'entrée de boîte de vitesses du véhicule automobile.

6. Dispositif de friction (10) selon l'une quelconque des revendications précédentes, **caractérisé en ce qu'**il comporte des moyens élastiques (46) d'entretoisement axial des premier (24A) et second (24B) organes à garniture de friction, destinés à assurer la progressivité de l'embrayage.

7. Dispositif de friction (10) selon l'une quelconque des revendications précédentes, **caractérisé en ce que** la partie radialement interne (30A) du premier organe à garniture de friction (24A) est destinée a s'étendre radialement jusqu'à un palier de frottement (50) entourant un moyeu (16) destiné à être couplé à un arbre d'entrée de boîte de vitesses et libre en rotation par rapport à ce moyeu (16), de manière à participer, d'une part, au centrage des premier (28A) et second (28B) supports par rapport au moyeu (16) et, d'autre part, au positionnement axial de ce palier (50) par coopération avec un épaulement (50E) de ce palier (50).

8. Dispositif de friction (10) selon l'une quelconque des revendications précédentes, **caractérisé en ce que** le second organe à garniture de friction (24B) comporte :
- une partie radialement externe (32B), comportant une garniture de friction (26B),
- une partie radialement interne (30B), destinée à être solidarisée avec le premier organe à garniture de friction (24A), et
- des languettes élastiques de liaison (35B) munies chacune d'une première extrémité de liaison avec la partie radialement externe (32B) et d'une seconde extrémité de liaison avec la partie radialement interne (30B), les première et seconde extrémités de liaison présentant un décalage angulaire entre elles variable en fonction de l'écartement axial des deux organes à garniture de friction.

## Claims

1. Friction device (10) for a clutch, in particular for a motor vehicle, of the type comprising first (24A) and second (24B) friction lining members, substantially annular and coaxial, separated axially and delimited by opposing friction faces, in which the first friction lining member (24A) comprises:
- a radially external part (32A) comprising a friction lining (26A),
- a radially internal part (30A) intended to be connected to the second friction lining member (24B),
**characterised in that** the first friction lining member (24A) also comprises elastic connecting tongues (35A) each provided with a first end (36A) for connection with the radially external part (32A) and a second end (38A) for connection with the radially internal part (30A), the first (36A) and second (38A) connecting ends having an angular offset between them that is variable according to the axial separation of the two friction lining members (24A, 24B), and each connecting tongue being made in one piece with the radially internal (30A) and external (32A) parts.

2. Friction device (10) according to claim 1, **characterised in that** the connecting tongues (35A) are folded so that their first (36A) and second (38A) connecting ends are offset axially from each other.

3. Friction device (10) according to either one of the preceding claims, **characterised in that** it comprises means (42) of connecting the radially internal part (30A) with the second friction lining member (24B), comprising at least one fixing orifice (49A) formed in the radially internal part (30A).

4. Friction device (10) according to claim 3, **characterised in that** the connecting means (42) comprise at least one connecting orifice (44B) formed in the second friction lining member (24B), opposite the orifice (44A) formed in the radially internal part (30A), and a connecting rivet (46) passing through the connecting orifices (44A, 44B).

5. Friction device (10) according to claim 3 or 4, **characterised in that** the connecting means (42) are also intended to couple the radially internal part (30A) with a gearbox input shaft of the motor vehicle.

6. Friction device (10) according to any one of the preceding claims, **characterised in that** it comprises elastic means (46) for axial bracing of the first (24A) and second (24B) friction lining members, intended to ensure the progressiveness of the clutch.

7. Friction device 10 according to any one of the preceding claims, **characterised in that** the radially internal part (30A) of the first friction lining member (24A) is intended to extend radially as far as a friction bearing (50) surrounding a hub (16) intended to be coupled to a gearbox input shaft and free to rotate with respect to this hub (16), so as to participate on one hand in the centring of the first (28A) and second (28B) supports with respect to the hub (16) and on the other hand in the axial positioning of this bearing (50) by cooperation with a shoulder (50E) on this bearing (50).

8. Friction device (10) according to any one of the preceding claims, **characterised in that** the second friction lining member (24B) comprises:
- a radially external part (32A) comprising a friction lining (26A),
- a radially internal part (30A) intended to be connected to the first friction lining member (24A), and
- elastic connecting tongues (35B) each provided with a first end for connection with the radially external part (32B) and a second end for connection with the radially internal part (30B), the first and second connecting ends having an angular offset between them that is variable according to the axial separation of the two friction lining members.

## Patentansprüche

1. Reibungsvorrichtung (10) für eine Kupplung, insbesondere eines Kraftfahrzeugs, umfassend in etwa ringförmige und koaxiale erste (24A) und zweite (24B) Reibbelagorgane, die axial voneinander entfernt und durch entgegengesetzte Reibflächen begrenzt sind, von denen das erste Reibbelagorgan (24A) aufweist:
- einen radial äußeren Teil (32A) mit einem Reibbelag (26A),
- einen radial inneren Teil (30A), der dazu bestimmt ist, an dem zweiten Reibbelagorgan (24B) befestigt zu werden,
**dadurch gekennzeichnet, dass** das erste Reibbelagorgan (24A) außerdem elastische Verbindungslaschen (35A) umfasst, welche jeweils mit einem ersten Ende (36A) zur Verbindung mit dem radial äußeren Teil (32A) und einem zweiten Ende (38A) zur Verbindung mit dem radial inneren Teil (30A) versehen sind, wobei die ersten (36A) und zweiten (38A) Verbindungsenden zwischen sich einen Winkelversatz aufweisen, der in Abhängigkeit von der axialen Entfernung der beiden Reibbelagorgane (24A, 24B) variiert, und wobei jede Verbindungslasche (35A) einstückig mit dem radial inneren Teil (30A) und dem radial äußeren Teil (32A) ausgeführt ist.

2. Reibungsvorrichtung (10) nach Anspruch 1, **dadurch gekennzeichnet, dass** die Verbindungslaschen (35A) derart gebogen sind, dass ihre ersten (36A) und zweiten (38A) Verbindungsenden zueinander axial versetzt sind.

3. Reibungsvorrichtung (10) nach einem der vorherigen Ansprüche, **dadurch gekennzeichnet, dass** sie Mittel (42) zur Befestigung des radial inneren Teils (30A) an dem zweiten Reibbelagorgan (24B) aufweist, die zumindest eine in den radial inneren Teil (30A) eingebrachte Befestigungsöffnung (44A) umfassen.

4. Reibungsvorrichtung (10) nach Anspruch 3, **dadurch gekennzeichnet, dass** die Befestigungsmittel (42) mindestens eine in das zweite Reibbelagorgan (24B) eingebrachte Befestigungsöffnung (44B) umfassen, die der in den radial inneren Teil (30A) eingebrachten Öffnung (44A) gegenüberliegt, wobei ein Befestigungsniet (46) quer durch die Befestigungsöffnungen (44A, 44B) geht.

5. Reibungsvorrichtung (10) nach Anspruch 3 oder 4, **dadurch gekennzeichnet, dass** die Befestigungsmittel (42) auch dazu bestimmt sind, den radial inneren Teil (30A) mit einer Getriebeeingangswelle eines Kraftfahrzeugs zu koppeln.

6. Reibungsvorrichtung (10) nach einem der vorherigen Ansprüche, **dadurch gekennzeichnet, dass** sie elastische Mittel (46) zum axialen Abstützen der ersten (24A) und zweiten (24B) Reibbelagorgane umfasst, welche dazu bestimmt sind, die Progressivität der Kupplung zu gewährleisten.

7. Reibungsvorrichtung (10) nach einem der vorherigen Ansprüche, **dadurch gekennzeichnet, dass** der radial innere Teil (30A) des ersten Reibbelagorgans (24A) dazu bestimmt ist, sich radial bis zu einem Reiblager (50) zu erstrecken, welches eine zur Kopplung mit einer Getriebeeingangswelle bestimmte Nabe (16) umgibt und relativ zu dieser Nabe (16) frei drehbar ist, um einerseits an der Zentrierung der ersten (28A) und zweiten (28B) Träger relativ zur Nabe (16) und andererseits durch Zusammenwirken mit einem Vorsprung (50E) des Lagers (50) an der axialen Positionierung dieses Lagers (50) teilzunehmen.

8. Reibungsvorrichtung (10) nach einem der vorherigen Ansprüche, **dadurch gekennzeichnet, dass** das zweite Reibbelagorgan (24B) aufweist:
- einen radial äußeren Teil (32B) mit einem Reibbelag (26B),
- einen radial inneren Teil (30B), der dazu bestimmt ist, an dem ersten Reibbelagorgan (24A) befestigt zu werden, und
- elastische Verbindungslaschen (35B), die jeweils mit einem ersten Ende zur Verbindung mit dem radial äußeren Teil (32B) und einem zweiten Ende zur Verbindung mit dem radial inneren Teil (30B) versehen sind, wobei die ersten und zweiten Verbindungsenden zwischen sich einen Winkelversatz aufweisen, der in Abhängigkeit von der axialen Entfernung der beiden Reibbelagorgane variiert.
